# EUROPEAN PATENT APPLICATION

(11) **EP 3 965 492 A1**
(43) Date of publication of application: **09.03.2022**
(21) Application number: 19927901.9
(22) Date of filing: 03.05.2019
(51) Int. Cl.: H04W 72/04, H04W 28/04

(54) **USER EQUIPMENT AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); ZHANG, Xiaohong, Beijing, 100190 (CN); WANG, Lihui, Beijing, 100190 (CN); GUO, Shaozhen, Beijing, 100190 (CN); HOU, Xiaolin, Beijing, 100190 (CN); LI, Anxin, Beijing, 100190 (CN)
(74) Representative: Hoffmann Eitle
(86) International application number: PCT/JP2019/018198
(87) International publication number: WO 2020/225841

(57) **Abstract**

There is provided a user equipment including a receiving unit that receives control information and data; a control unit that specifies a sub-slot for transmitting a Hybrid Automatic Repeat Request-Acknowledgment (HARQ-ACK) for the data received by the receiving unit based on the control information received by the receiving unit, configures resource sets of one or more uplink control channels used for HARQ-ACK bit transmission for the specified sub-slot, selects a resource set of one uplink control channel among the resource sets of the one or more uplink control channels based on payload size of uplink control information including the HARQ-ACK, and selects one resource among one or more resources included in the resource set of the selected one uplink control channel based on the control information received by the receiving unit; and a transmitting unit that transmits the uplink control information using the selected one resource.

## Description

### TECHNICAL FIELD

The present invention relates to user equipment and a communication method in a radio communication system.

### BACKGROUND ART

In Release 15 of Third Generation Partnership Project (3GPP), there is only one Physical Uplink Control Channel (PUCCH) in each slot that feedbacks a Hybrid Automatic Repeat Request (HARQ)-Acknowledgement (ACK). That is, when attempting to feedback a plurality of HARQ-ACKs in the same slot, the plurality of HARQ-ACKs are automatically multiplexed on one PUCCH (slot-based HARQ-ACK feedback).

For Ultra Reliable and Low Latency Communications (URLLC), that is, in consideration of low delay, it is advantageous to be able to configure a plurality of PUCCH transmission opportunities for transmitting HARQ-ACKs in one slot, and, thus, it is assumed that this configuration is supported in Release 16.

### Related Art Document

### [Non-Patent Document]

Non-Patent Document 1: 3GPP TS 38.331 V15.5.0 (2019-03)
Non-Patent Document 2: 3GPP TS 38.213 V15.5.0 (2019-03)

### SUMMARY OF THE INVENTION

### [PROBLEM TO BE SOLVED BY THE INVENTION]

In Release 15, four PUCCH resource sets are available, the maximum number of PUCCH resources in PUCCH resource set 0 is configured to 32, and the maximum number of PUCCH resources in PUCCH resource sets 1, 2, and 3 is configured to 8. In Release 16, it is assumed that a subslot-based HARQ-ACK feedback procedure is applied to the URLLC service. That is, it is assumed that one slot is divided into a plurality of sub-slots, and the HARQ-ACK is transmitted using one PUCCH per sub-slot.

In this case, the PUCCH resources/PUCCH resource sets configured in Release 15 may be insufficient (e.g., there are not enough PUCCH resources available) for a user equipment corresponding to URLLC traffic with/without eMBB traffic, that is, for a user equipment to which the slot-based HARQ-ACK feedback procedure and/or the subslot-based HARQ-ACK feedback procedure may be applied when considering the payload size of UCI, PUCCH format, start symbol/length of the PUCCH, and avoiding collision of PUCCH resources with another user equipment. Accordingly, it is necessary to extend the mechanism for configuring the PUCCH resource.

### [MEANS FOR SOLVING THE PROBLEM]

According to one aspect of the present invention, there is provided a user equipment, the user equipment including:
a receiving unit that receives control information and data;
a control unit that
   identifies a sub-slot for transmitting a Hybrid Automatic Repeat Request-Acknowledgment (HARQ-ACK) for the data received by the receiving unit based on the control information received by the receiving unit;
   configures resource sets of one or more uplink control channels used for HARQ-ACK bit transmission for the identified sub-slot;
   selects a resource set of one uplink control channel among the resource sets of the one or more uplink control channels based on payload size of uplink control information including the HARQ-ACK; and
   selects one resource among one or more resources included in the resource set of the selected one uplink control channel based on the control information received by the receiving unit; and
a transmitting unit that transmits the uplink control information using the selected one resource.

### [ADVANTAGE OF THE INVENTION]

According to an embodiment, it is possible to configure an appropriate PUCCH resource set for subslot-based HARQ-ACK feedback, and to sufficiently secure usable PUCCH resources for a user equipment corresponding to the URLLC traffic.

### BRIEF DESCRIPTION OF DRAWINGS

Fig. 1 is a configuration diagram of a communication system according to the present embodiment.
Fig. 2 is a diagram illustrating an example of an IE for configuring a PUCCH resource.
Fig. 3 is a diagram illustrating an example of an IE for configuring a PUCCH resource.
Fig. 4 is a diagram illustrating an example of an IE for configuring a PUCCH resource.
Fig. 5 is a diagram illustrating an example in which, after receiving data on PDSCH, a corresponding HARQ-ACK is transmitted on PUCCH.
Fig. 6 is a diagram illustrating an example in which PUCCH resource sets 0, 1, 2, and 3 are configured.
Fig. 7 is a diagram illustrating an example of a PUCCH resource indicator.
Fig. 8 is a diagram illustrating an example of a sub-slot pattern.
Fig. 9 is a diagram illustrating an example of a sub-slot configuration.
Fig. 10A is a diagram illustrating an example of Proposal 1-1-1.
Fig. 10B is a diagram illustrating an example of Proposal 1-1-1.
Fig. 10C is a diagram illustrating an example of Proposal 1-1-1.
Fig. 10D is a diagram illustrating an example of Proposal 1-1-1.
Fig. 11 is a diagram illustrating an example of a subslot-based PUCCH resource set.
Fig. 12A is a diagram illustrating an example of Proposal 1-2.
Fig. 12B is a diagram illustrating an example of Proposal 1-2.
Fig. 12C is a diagram illustrating an example of Proposal 1-2.
Fig. 13 is a diagram illustrating an example in which axes representing the payload size of the UCI are overlapped.
Fig. 14 is a diagram illustrating an example of Proposal 2-1-1.
Fig. 15 is a diagram illustrating an example of Proposal 2-1-2.
Fig. 16 is a diagram illustrating an example of Proposal 2-2-1.
Fig. 17 is a diagram illustrating an example of Proposal 2-2-2.
Fig. 18 is a diagram illustrating an example of a functional configuration of a user equipment.
Fig. 19 is a diagram illustrating an example of a functional configuration of a base station.
Fig. 20 is a diagram illustrating an example of a hardware configuration of a user equipment and a base station.

### [EMBODIMENTS OF THE INVENTION]

In the following, embodiments of the present invention are described with reference to the drawings. The embodiments described below are merely examples, and embodiments to which the present invention is applied are not limited to the following embodiments.

The radio communication system according to the following embodiments is assumed to basically conform to NR, but this is an example, and the radio communication system according to the embodiments may conform to a radio communication system other than NR (e.g., LTE) in whole or in part.

### (Overall System Configuration)

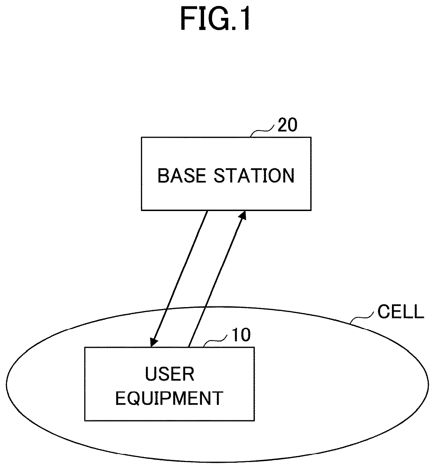

FIG. 1 shows a configuration diagram of a radio communication system according to the present embodiment. The radio communication system according to the embodiments includes a user equipment 10 and a base station 20 as illustrated in FIG. 1. In FIG. 1, one user equipment 10 and one base station 20 are illustrated. This is an example, and there may be a plurality of units of the user equipment 10 and a plurality of the base stations 20.

The user equipment 10 is a communication device having a radio communication function, such as a smartphone, a cellular phone, a tablet, a wearable terminal, and a communication module for M2M (Machine-to-Machine). The user equipment 10 wirelessly connects to the base station 20 and utilizes various communication services provided by the radio communication system. The base station 20 is a communication device that provides one or more cells and wirelessly communicates with the user equipment 10. The user equipment 10 may also be referred to as a UE, and the base station 20 may be referred to as a gNB.

In the embodiments, the duplex method may be a TDD (Time Division Duplex) method or an FDD (Frequency Division Duplex).

In 3GPP Release 15, there is only one Physical Uplink Control Channel (PUCCH) in each slot that feedbacks a Hybrid Automatic Repeat Request-Acknowledgement (HARQ-ACK). That is, when attempting to feedback a plurality of HARQ-ACKs in the same slot, the plurality of HARQ-ACKs are automatically multiplexed on one PUCCH (slot-based HARQ-ACK feedback).

For the URLLC, that is, in consideration of low latency, it is advantageous to be able to configure a plurality of PUCCH transmission opportunities for transmitting HARQ-ACKs in one slot, and, thus, it is assumed that this configuration is supported in Release 16.

A HARQ-ACK codebook defines the method for combining a plurality of HARQ-ACKs when the plurality of HARQ-ACKs are to be collectively multiplexed and transmitted. In Release 16, a HARQ-ACK for enhanced Mobile Broadband (eMBB) and a HARQ-ACK for Ultra Reliable and Low Latency Communications (URLLC) may be generated at the same time, so that at least two HARQ-ACK codebooks may be generated simultaneously in a certain UE.

As for a case where a plurality of transmission opportunities of the PUCCH can be configured in one slot, a subslot-based HARQ-ACK feedback is defined that the one slot is divided into a plurality of sub-slots and a HARQ-ACK is able to be feedbacked in each sub-slot of the plurality of sub-slots. It is noted that the transmission on PDSCH need not be performed on the above subslot-basis.

Here, the HARQ-ACK codebook may be configured to include a bit for the HARQ-ACK in a unit of at least one a time domain (e.g., a slot), a frequency domain (e.g., a component carrier (CC)), a spatial domain (e.g., a layer), a transport block (TB) and a group of a code block (Code Block Group (CBG)) constituting the TB. In addition, the CC is also referred to as a cell, a serving cell, a carrier, or the like. Furthermore the bit is referred to as a HARQ-ACK bit, HARQ-ACK information, a HARQ-ACK information bit, or the like. The HARQ-ACK codebook is also referred to as a PDSCH-HARQ-ACK codebook (pdsch-HARQ-ACK-Codebook), a codebook, a HARQ codebook, a HARQ-ACK size, or the like.

The number of bits (size) included in the HARQ-ACK codebook may be determined semi-statically or dynamically. The semi-static HARQ-ACK codebook is also referred to as a Type I HARQ-ACK codebook, a semi-static codebook, or the like. The dynamic HARQ-ACK codebook is also referred to as a Type II HARQ-ACK codebook, a dynamic codebook, or the like.

Whether to use the Type I HARQ-ACK codebook or the Type II HARQ-ACK codebook may be configured in the UE by a higher layer parameter (for example, the pdsch-HARQ-ACK-Codebook).

In the case of the Type I HARQ-ACK codebook, the UE may feedback, in a predetermined range (for example, a range configured based on higher layer parameters), the HARQ-ACK bits corresponding to the predetermined range regardless of whether the PDSCH is scheduled.

The predetermined range may be determined based on at least one of a predetermined duration (for example, a set of a predetermined number of occasions for receiving candidate PDSCHs, or a predetermined number of monitoring occasions of the PDCCH), the number of CCs configured or activated in the UE, the number of TBs (the number of layers or ranks), the number of CBGs per the TB, and the presence/absence of the application of spatial bundling. The predetermined range is also referred to as a HARQ-ACK bundling window, a HARQ-ACK feedback window, a bundling window, a feedback window, or the like.

In the case of the Type I HARQ-ACK codebook, the UE feedbacks a NACK bit within the predetermined range even if there is no PDSCH scheduling for the UE. For this reason, when the Type I HARQ-ACK codebook is used, it is assumed that the number of HARQ-ACK bits to be feedback may increase.

In contrast, in the case of the Type II HARQ-ACK codebook, the UE may feedback the HARQ-ACK bits for the scheduled PDSCH within the predetermined range.

Specifically, the UE may determine the number of bits of the Type II HARQ-ACK codebook based on a predetermined field in DCI (e.g., a DL allocation index (Downlink Assignment Indicator (Index) (DAI)) field). The DAI field may be split into a counter DAI (cDAI)) and a total DAI (tDAI)).

The counter DAI may indicate a counter value of downlink transmission (PDSCH, data, TB) scheduled within a predetermined duration. For example, the counter DAI in the DCI that schedules data within the predetermined duration may indicate the number counted in the frequency domain (for example, CC) first and thereafter in the time domain within the predetermined duration.

The total DAI may indicate a total value (total number) of data scheduled within a predetermined duration. For example, the total DAI in the DCI that schedules data at a predetermined time unit (for example, a PDCCH monitoring occasion) within the predetermined duration may indicate the total number of data scheduled up to the predetermined time unit (which is referred to as point, timing, or the like) within the predetermined duration.

The UE may transmit one or more HARQ-ACK bits determined (generated) based on the Type I or Type II HARQ-ACK codebook mentioned above by using at least one of uplink control channels (Physical Uplink Control Channel (PUCCH)) and an uplink shared channel (Physical Uplink Shared Channel (PUSCH)).

When transmitting a subslot-based PUCCH, the number or length of uplink sub-slots in one slot is dedicatedly and semi-statically configured for the user equipment 10.

There is a need for defining details of a PUCCH resource configuring method and a PUCCH resource determining method.

In both the Type I HARQ-ACK codebook and the Type II HARQ-ACK codebook, it is assumed that a HARQ-ACK codebook of different service types (for example, a HARQ-ACK codebook configured in HARQ-ACK for eMBB data transmission (eMBB HARQ-ACK codebook) and a HARQ-ACK codebook configured in HARQ-ACK for URLLC data transmission (URLLC HARQ-ACK codebook)) are generated at the same time. In such a situation, it is considered to be necessary to specify service types of data transmission corresponding to the HARQ-ACKs. That is, when generating HARQ-ACK codebooks for data reception of a plurality of different service types, it is considered to be necessary to specify which HARQ-ACK codebook from the eMBB HARQ-ACK codebook and the URLLC HARQ-ACK codebook should be generated. In other words, it is considered to be necessary to specify that a HARQ-ACK corresponding to a certain data reception should be included in either the eMBB HARQ-ACK codebook or the URLLC HARQ-ACK codebook. Since it is assumed that operations of the user equipment 10 to generate the eMBB HARQ-ACK codebook and to generate the URLLC HARQ-ACK codebook are different, it is considered to be necessary to specify the service type invoking the generated HARQ-ACK. It is noted that the service type is described using "eMBB" and "URLLC" as an example, but is not limited thereto.

The following options are considered as a method for identifying a service type of received data, and/or a method for identifying a HARQ-ACK codebook that should include a HARQ-ACK corresponding to the received data, and/or a method (signaling) for distinguishing the UE operations when transmitting the HARQ-ACK corresponding to the received data.

Opt. 1: A method for using a Downlink Control Information (DCI) format.

Opt. 2: A method for using a Radio Network Temporary Identifier (RNTI).

Opt. 3: A method for using explicit indication in the DCI. For example, a new DCI field may be defined, and the above service types may be distinguished by a value of the DCI field. In this case, for example, the size of the field may be 1 bit, and if the value of the field is 0, the HARQ-ACK indicating decoding result of the PDSCH scheduled by the DCI may be included in the HARQ-ACK codebook of the eMBB. If the value of the field is 1, the HARQ-ACK indicating the decoding result of the PDSCH scheduled by the DCI may be included in the HARQ-ACK codebook of the URLLC. That is, the operation of the user equipment 10 may be changed depending on the value of the field. Alternatively, the already defined DCI field may be reused.

Opt. 4: A method for using Control-resource set (CORESET)/search space.

Hereinafter, "eMBB" and "URLLC" may mean the above identification/distinction according to at least any one of the following options. For example, when Opt. 1 is used, "HARQ-ACK of the URLLC" may mean a HARQ-ACK that indicates, for example, a decoding result of the PDSCH scheduled by the DCI format associated with the UE operation of the URLLC (e.g., the subslot-based HARQ-ACK feedback). Also, for example, when Opt. 3 is used, the "HARQ-ACK of the URLLC" may mean a HARQ-ACK that indicates, for example, a decoding result of the PDSCH scheduled by the DCI having the value of the DCI field associated with the UE operation of the URLLC (e.g., the subslot-based HARQ-ACK feedback). Alternatively, options other than the above may be used.

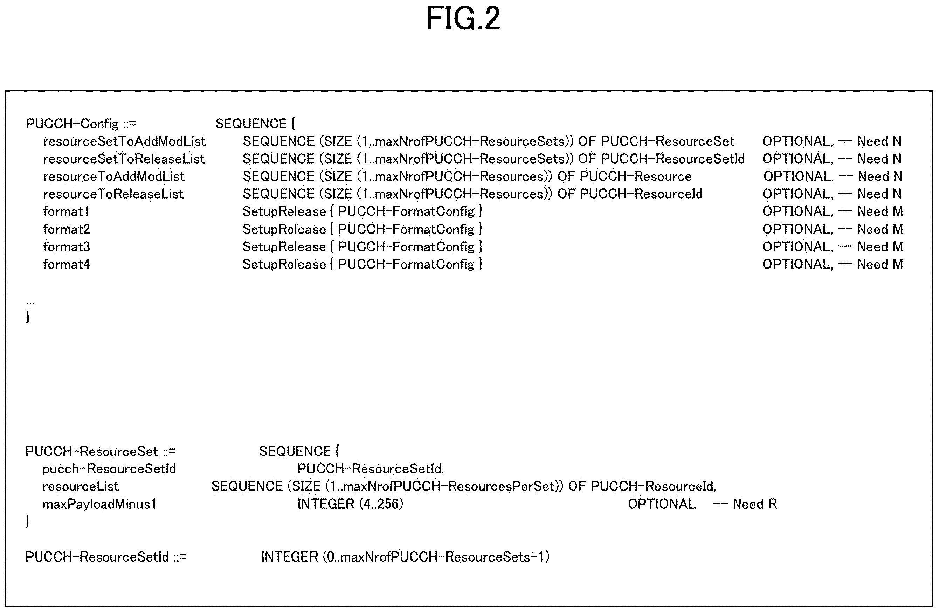

As illustrated in Fig. 2, the technical specification document on Radio Resource Control (RRC) of Release 15 (Non-Patent Document 1) defines Information Element (IE) for PUCCH resource configuration by the RRC.

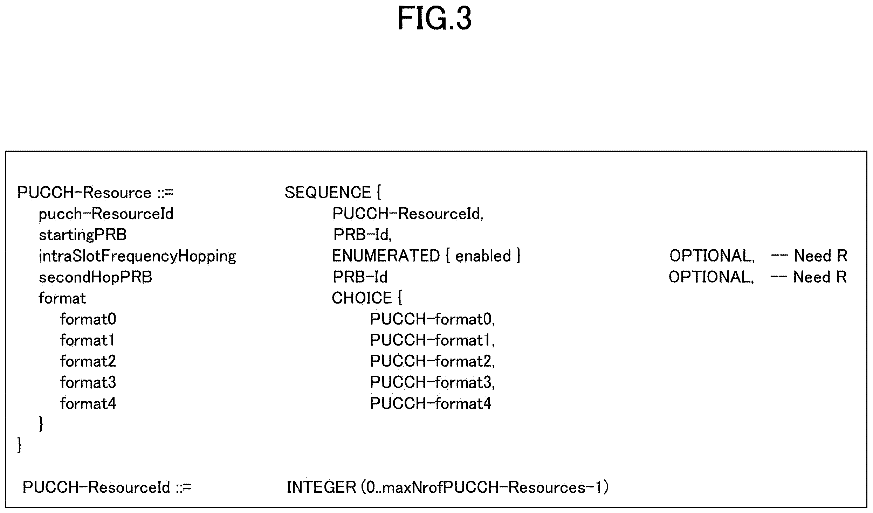

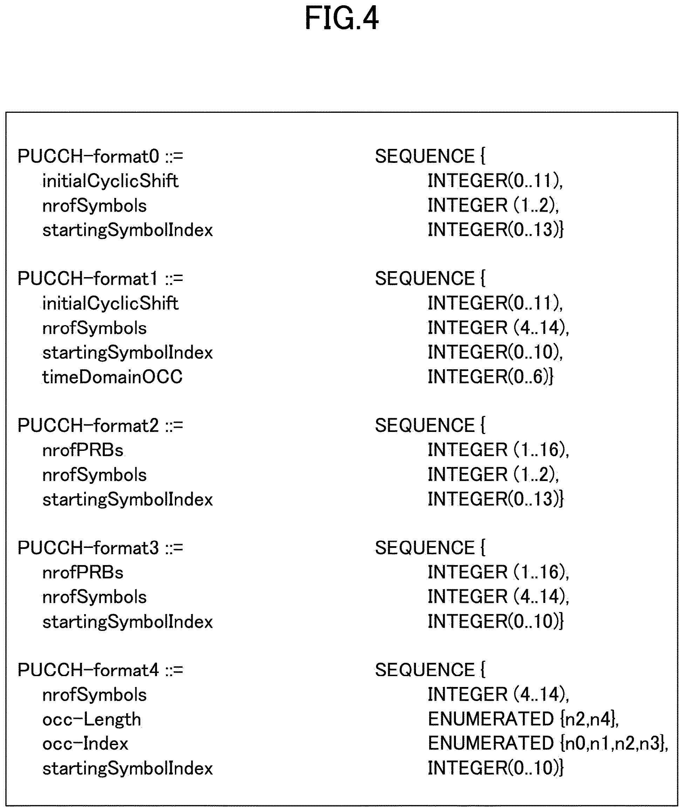

A PUCCH-ResourceSet in the PUCCH-Config configures a PUCCH resource dedicated for the user equipment 10. Each PUCCH-ResourceSet may include up to eight PUCCH resources. Exceptionally, PUCCH resource set 0, that is, a PUCCH-ResourceSet with a pucch-ResourceSetId of 0 may include up to 32 PUCCH resources. The PUCCH-Config may include four such PUCCH-ResourceSets. In addition, detailed configurations of resources in each PUCCH-ResourceSet are determined by PUCCH-ResourceSet illustrated in Fig. 2 and PUCCH-Resource illustrated in Fig. 3. Furthermore, it is necessary to indicate whether a format of the resource of each PUCCH-ResourceSet is PUCCH-format 0, PUCCH-format 1, PUCCH-format 2, PUCCH-format 3, or PUCCH-format 4. To set the format, it is possible to perform setting as illustrated in Fig. 4. Namely, the configuration is such that the PUCCH format is associated with the PUCCH resource, and the PUCCH resource is associated with one or more PUCCH-ResourceSets.

### (Determination of PUCCH Resource of HARQ-ACK Codebook in Release 15)

Hereinafter, a method for determining the PUCCH resource of the HARQ-ACK codebook in Release 15 is described.

### (Step 1)

A slot for transmitting a HARQ-ACK is determined by K1.

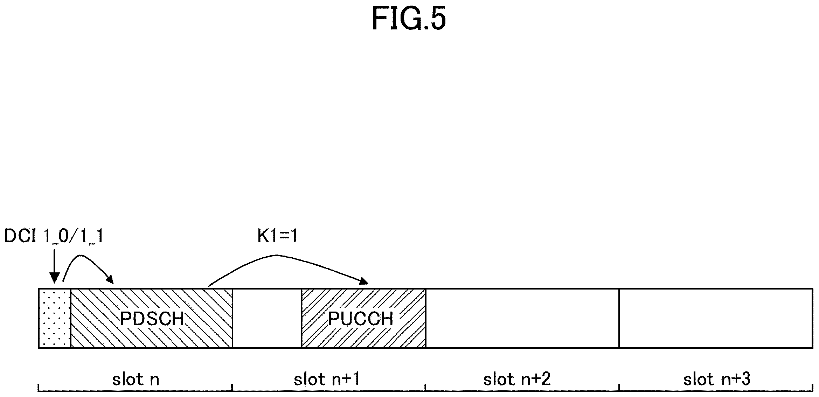

The user equipment 10 receives Downlink Control Information (DCI) for scheduling data transmission on the PDSCH. This DCI includes an indicator (PDSCH-to-HARQ_feedback timing indicator field) indicating the timing of a slot for transmitting a HARQ-ACK. This indicator is referred to as K1, and the K1 indicates a time interval between reception of downlink data and transmission of uplink acknowledgment information. For example, as illustrated in Fig. 5, when K1=1, the user equipment 10 receives data on the PDSCH (slot n) and then transmits corresponding HARQ-ACK on the PUCCH at the timing after one slot (slot n+1). Here, one HARQ-ACK codebook is configured for HARQ-ACKs that are instructed to be transmitted at the same timing (slot).

DCI format 1_0 and DCI format 1_1 are DCI formats with which transmission of data can be scheduled on the PDSCH. In the case of the DCI format 1_0, value that can be specified by the K1 is any one of range: {1, 2, 3, 4, 5, 6, 7, 8}. Any one of values included within the above range is specified by three bits included in PDSCH-to-HARQ_feedback timing indicator field. In the case of the DCI format 1_1, the value of the K1 can be configured more flexibly. Specifically, a range of numerical values that can be specified by the K1 is configured by RRC parameter dl-DataToUL-ACK, and then any one of values included within the configured ranges is specified by 3 bits included in the PDSCH-to-HARQ_feedback timing indicator field.

### (Step 2)

A PUCCH resource set in the slot is determined.

The user equipment 10 may configure up to four PUCCH resource sets by the RRC signaling (it is also possible to configure three or less PUCCH resource sets). Here, for the collectively transmitted Uplink Control Information (UCI), one PUCCH resource set is selected from the maximum of four PUCCH resource sets configured based on the payload size of the UCI. It is noted that the UCI may include at least one of HARQ-ACK, Scheduling Request (SR), and Channel State Information (CSI). For example, when one HARQ-ACK codebook corresponds to the collectively transmitted UCI, the payload size of the UCI may mean the number of HARQ-ACK bits in the one HARQ-ACK codebook.

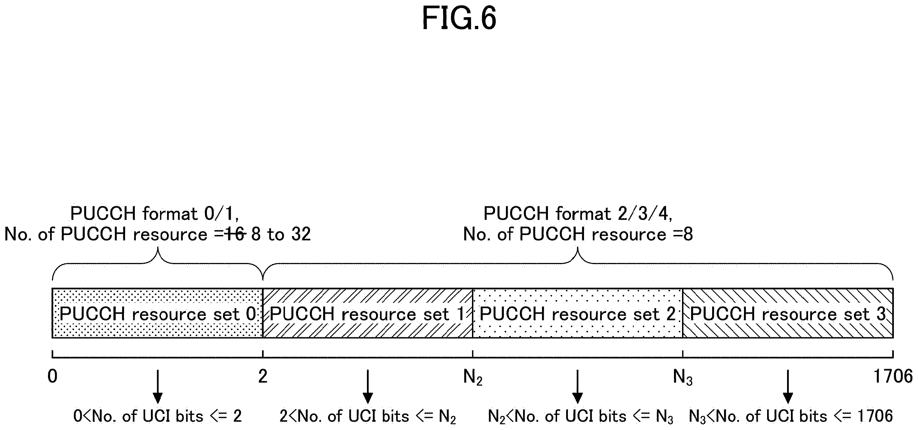

For example, suppose that PUCCH resource sets 0, 1, 2, and 3 are configured as illustrated in Fig. 6. If the number of bits of the UCI is 1 or 2, the PUCCH resource set 0 is selected. If the number of bits of the UCI is greater than 2 and less than or equal to N₂, the PUCCH resource set 1 is selected. If the number of bits of the UCI is greater than N₂ and less than or equal to N₃, the PUCCH resource set 2 is selected. If the number of bits of the UCI is greater than N₃ and less than or equal to 1706, the PUCCH resource set 3 is selected. Here, the values of N₂ and N₃ are configured by RRC parameter maxPayloadMinus1. Each PUCCH resource set among the PUCCH resource sets 1, 2, and 3 includes up to eight PUCCH resources. For the PUCCH resource set 0, the number of PUCCH resources can be configured up to 32.

### (Step 3)

One PUCCH resource in the PUCCH resource set is selected.

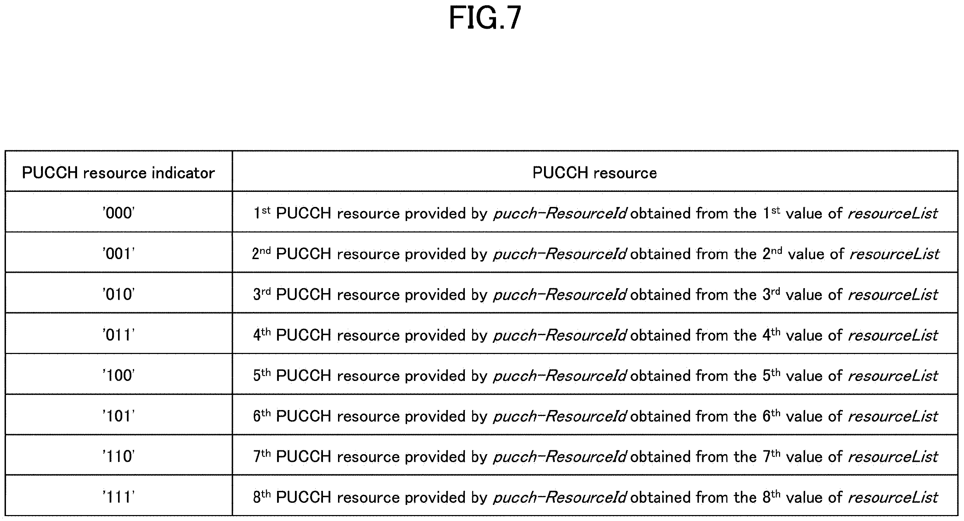

One PUCCH resource is specified from the maximum of eight PUCCH resources by a maximum of three bits in a PUCCH resource-indicator (PRI) field included in the DCI. Even in the case of the PUCCH resource set 0, the PRI field includes up to 3 bits. One PUCCH resource is specified from a maximum of 32 PUCCH resources by a combination of the maximum of 3 bits of the PRI field and a maximum of 2 bits obtained from a Control Channel Element (CCE) index. Fig. 7 is a diagram illustrating an example of the PUCCH resource indicator.

### (Problem)

In Release 15, four PUCCH resource sets are available, the maximum number of PUCCH resources in the PUCCH resource set 0 is 32, and the maximum number of PUCCH resources in the PUCCH resource sets 1, 2, and 3 is 8. In Release 16, it is assumed that a subslot-based HARQ-ACK feedback procedure is applied to the URLLC service. That is, it is assumed that one slot is divided into a plurality of sub-slots, and the HARQ-ACK is transmitted using one PUCCH for each sub-slot. In this case, the PUCCH resources/PUCCH resource sets configured in Release 15 may be insufficient (e.g., there are not enough PUCCH resources available) for a user equipment 10 corresponding to URLLC traffic with/without eMBB traffic, that is, for a user equipment to which the slot-based HARQ-ACK feedback procedure and/or the subslot-based HARQ-ACK feedback procedure may be applied when considering the payload size of the UCI, PUCCH format, start symbol/length of the PUCCH, and avoiding collision of the PUCCH resources with another user equipment 10. Accordingly, there is a need for extending the mechanism for configuring the PUCCH resource for Release 16.

### (Proposal 1)

A PUCCH resource set for transmitting a HARQ-ACK of the URLLC is defined, and for the URLLC traffic, a PUCCH resource set dedicated to the URLLC is used. Furthermore, a PUCCH resource set for transmitting a HARQ-ACK of the eMBB is defined, and for the eMBB traffic, a PUCCH resource set dedicated to the eMBB is used. That is, for example, (i) one or more PUCCH resource sets (URLLC PUCCH resource sets) used for HARQ-ACK bit transmission to which the subslot-based HARQ-ACK feedback is applied and (ii) one or more PUCCH resource sets (eMBB PUCCH resource sets) used for HARQ-ACK bit transmission to which the slot-based HARQ-ACK feedback is applied may be defined/configured as separate parameters. In the case of the subslot-based HARQ-ACK feedback, PUCCH resources may be selected from one URLLC PUCCH resource set. In the case of the slot-based HARQ-ACK feedback, PUCCH resources may be selected from one eMBB PUCCH resource set. Alternatively, the definition/setting/selection of the above two types of PUCCH resource sets may be performed separately by signaling for identifying the above service type.

One or more new PUCCH resource sets may be configured as the URLLC PUCCH resource sets. Each PUCCH resource set of the one or more new PUCCH resource sets may include, for example, four or eight PUCCH resources, and the number of PUCCH resources is not limited thereto. The eMBB PUCCH resource set may be configured by a higher layer parameter that is the same as that of the PUCCH resource set in NR Release 15. The user equipment 10 may determine PUCCH resources to use based on whether the payload size of the UCI and the HARQ-ACK feedback is directed for the URLLC or the eMBB (that is, based on a method for identifying a service type of the received data, and/or a method for identifying a HARQ-ACK codebook that should include a HARQ-ACK corresponding to the received data, and/or a method (signaling) for distinguishing the UE operations when transmitting the HARQ-ACK corresponding to the received data). Whether the HARQ-ACK feedback is directed for the URLLC or the eMBB may be determined based on DCI format, RNTI, explicit indication in the DCI, search space, and the like.

### (Proposal 1-1)

One or more subslot-based PUCCH resource sets are configured as PUCCH resource sets for transmitting a HARQ-ACK of the URLLC (URLLC PUCCH resource sets). The PUCCH resource set is configured after being associated with the sub-slot. At this time, PUCCH resources are configured such that the PUCCH resources are accommodated in each sub-slot. The PUCCH resource in the PUCCH resource set is not allowed to cross a sub-slot boundary and/or a slot boundary. However, the present embodiment is not limited to this configuration, and may be configured, for example, so as to cross the sub-slot boundary and/or the slot boundary.

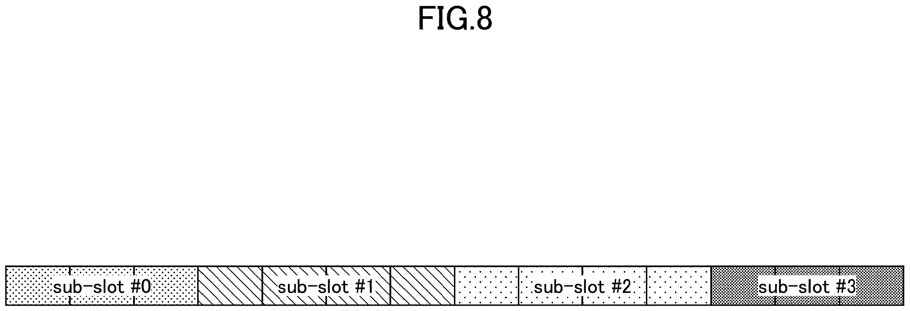

As a configuration of the sub-slot, two sub-slots having a length of 7 symbols may be configured in one slot. Alternatively, seven sub-slots having a length of 2 symbols may be configured in one slot. Alternatively, a sub-slot composed of 3 symbols and a sub-slot composed of 4 symbols may be mixed in one slot (for example, (3 symbols/4 symbols/ 4 symbols/3 symbols) may be mixed, or (4 symbols/3 symbols/4 symbols/3 symbols) may be mixed). The configuration of the sub-slot is not limited to thereto. The configuration of sub-slots within one slot may be configured by higher layer parameters, or additionally or alternatively, may be configured by explicit/implicit indication by the DCI. Fig. 8 is a diagram illustrating an example of a sub-slot pattern of (3 symbols/4 symbols/4 symbols/3 symbols). The PUCCH resource set may be configured as any one of a combination of the two sub-slots composed of 7 symbols, a combination of the seven sub-slots composed of 2 symbols, a combination of sub-slots composed of (3 symbols/4 symbols/4 symbols/3 symbols), a combination composed of (3 symbols/4 symbols/3 symbols/4 symbols) and a combination of sub-slots of (4 symbols/3 symbols/4 symbols/3 symbols) as described above).

### (Proposal 1-1-1)

The PUCCH resource set may be configured for each sub-slot included in each of the combinations of sub-slots as described above. For example, in the sub-slot configuration of Fig. 8, a PUCCH resource set may be configured for sub-slot #0, another PUCCH resource set may be configured for sub-slot #1, further another PUCCH resource set may be configured for sub-slot #2, and yet another PUCCH resource set may be configured for sub-slot #3. At this time, some of the PUCCH resource sets may be shared between the above sub-slots. Furthermore, all PUCCH resource sets may be shared between sub-slots having the same sub-slot length. In addition, the PUCCH resource set may be configured for each sub-slot length. By configuring each of the PUCCH resource sets for each sub-slot in this way, it is possible to enhance flexibility of scheduling for HARQ-ACK feedback of the URLLC.

### (Proposal 1-1-2)

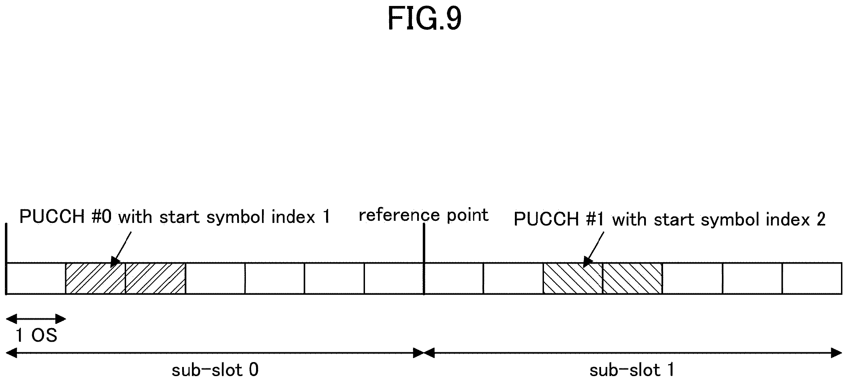

The PUCCH resource set may be configured only for the first sub-slot in time, and the same PUCCH resource set may be used for other sub-slots in one slot. In other words, a common PUCCH resource set may be configured for all sub-slots. In this case, as for a reference point of the start symbol of the PUCCH resource in the PUCCH resource set, a boundary of a sub-slot may be newly defined as the reference point of the start symbol, for a sub-slot other than the first sub-slot in time. Namely, the above-described start symbol may indicate that the start symbol of the PUCCH is located at which symbol counted from the first symbol of each sub-slot. For example, in the sub-slot configuration of Fig. 9, for sub-slot 0, which is the first sub-slot in time, the reference point of the start symbol may be the start position of the first symbol in time, and for sub-slot 1, the reference point of the start symbol may be a boundary between the sub-slot 0 and the sub-slot 1. In the example of Fig. 9, since a start symbol index is 1 in the sub-slot 0, PUCCH #0 is started from a symbol next to the first symbol in time. Furthermore, since the start symbol index is 2 in the sub-slot 1, PUCCH #1 is started from a symbol after two symbols from the boundary between the sub-slot 0 and the sub-slot 1. In this way, by configuring the PUCCH resource set for one sub-slot and using the same PUCCH resource set for the other sub-slots in the one slot, it is possible to reduce control complexity in the user equipment 10 and to reduce the increase amount of the higher layer parameters.

### (Summary of Proposal 1-1)

Similar to Release 15, PUCCH resources for the user equipment 10 are determined in three steps.

### (Step 1)

A sub-slot is determined based on HARQ-ACK timing K1.

### (Step 2)

Based on the payload size of the UCI, a PUCCH resource set is determined from the PUCCH resource sets used in the sub-slot. A PUCCH resource set in the sub-slot is determined.

### (Step 3)

The PUCCH resource in the PUCCH resource set is determined based on the indication by 1 bit, 2 bits or 3 bits of the PRI field of the DCI. Additionally, or alternatively, the PUCCH resource in the PUCCH resource set may be determined based on an implicit indication (e.g., 1 bit, 2 bits, or more than 2 bits based on a CCE index) .

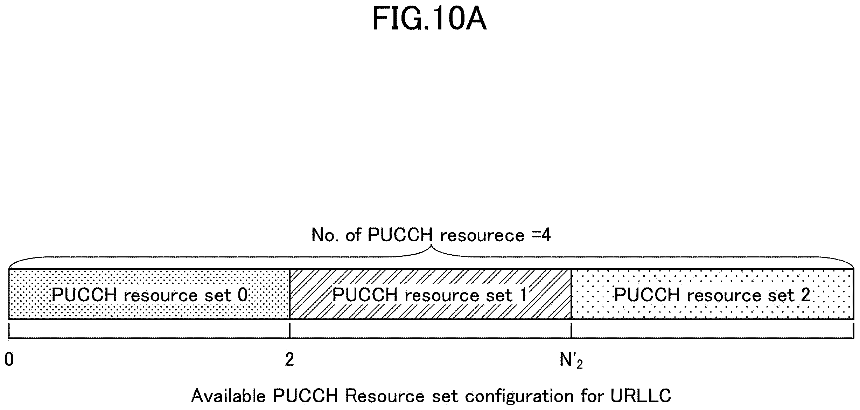

A specific example of Proposal 1-1-1 is described with reference to Figs. 10A to 10D.

For example, as illustrated in Fig. 10A, the user equipment 10 corresponding to the URLLC service may be able to configure up to three PUCCH resource sets. Each PUCCH resource set includes four PUCCH resources, and N₂' and N₃', which are boundaries of the PUCCH resource set sizes, may be the same as or different from those of the eMBB.

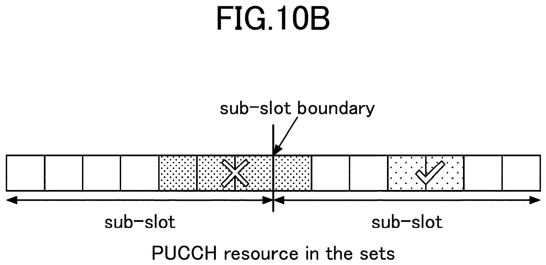

As illustrated in Fig. 10B, the PUCCH resource in the PUCCH resource set is not allowed to cross the sub-slot boundary.

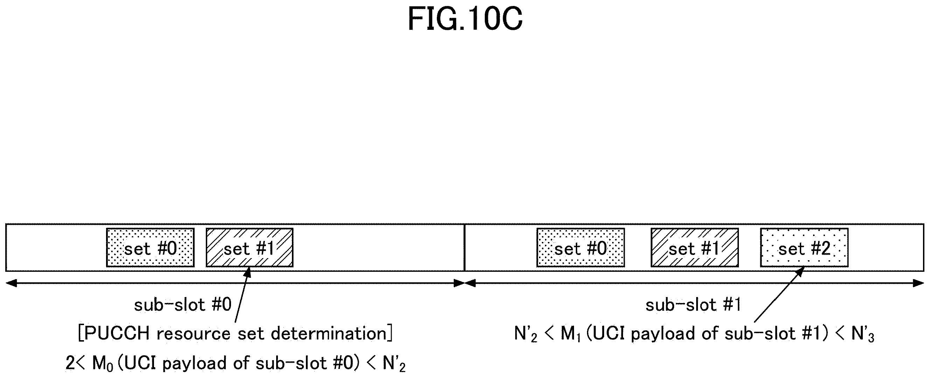

Next, as illustrated in Fig. 10C, PUCCH resource set #0 and PUCCH resource set #1 are defined for sub-slot #0, and PUCCH resource set #0, PUCCH resource set #1, and PUCCH resource set #2 are defined for sub-slot #1. It is noted that the PUCCH resource set #0 and the PUCCH resource set #1 may be common or different for the sub-slot #0 and the sub-slot #1. Since the payload size of the UCI for the sub-slot #0 is greater than 2 and less than N2', the PUCCH resource set #1 is determined as a PUCCH resource set in the sub-slot #0. Furthermore, since the payload size of the UCI for the sub-slot #1 is larger than N₂' and smaller than N₃', the PUCCH resource set #2 is determined as a PUCCH resource set in the sub-slot #1.

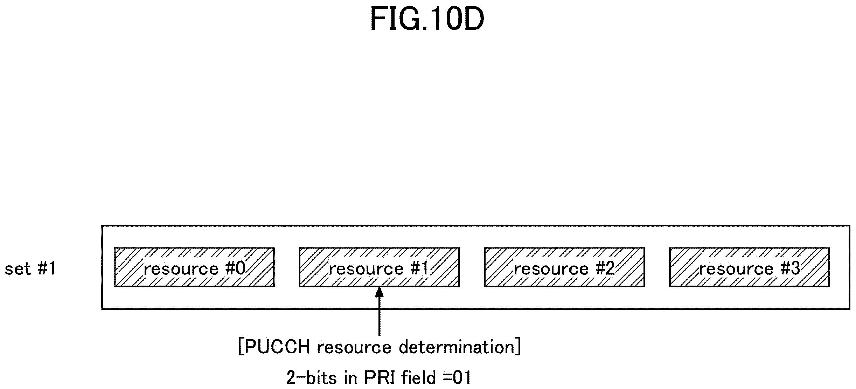

Next, as illustrated in Fig. 10D, for example, four resources have been configured in the PUCCH resource set #1, and then, based on the fact that 2 bits of the PRI field are 01, the resource #1 illustrated in Fig. 10D may be determined as the PUCCH resource of the sub-slot #0.

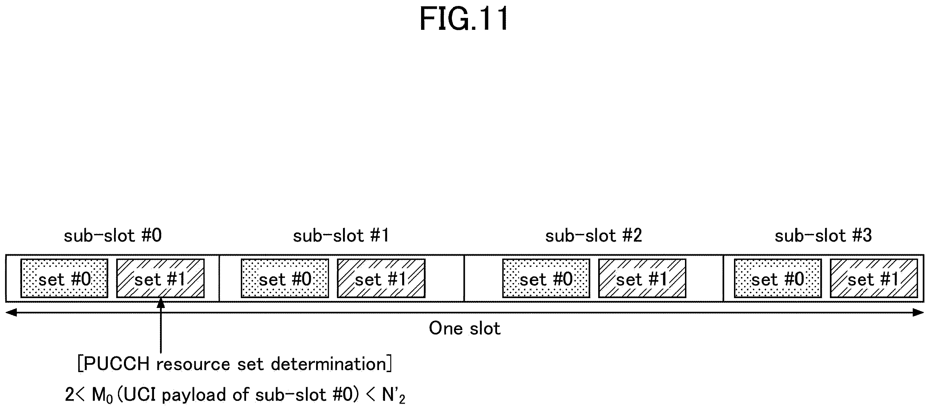

In Fig. 10C, a PUCCH resource set is defined per sub-slot. However, for example, as illustrated in Fig. 11, a PUCCH resource set may be defined for sub-slot #0 that is the first sub-slot in time, and the same PUCCH resource set as the PUCCH resource set defined for the sub-slot #0 may be applied to other sub-slots in one slot.

### (Proposal 1-2)

One or more slot-based PUCCH resource sets are configured as PUCCH resource sets for transmitting a HARQ-ACK of the URLLC (URLLC PUCCH resource sets). Since the sub-slot is a virtual resource unit used as a granularity when specifying K1, the PUCCH resource set does not have to be associated with the sub-slot. The PUCCH resource in a PUCCH resource set may cross the sub-slot boundary. The PUCCH resource set is configured for each slot, similar to the PUCCH resource set in Release 15. The determination of the PUCCH resource for the user equipment 10 may be performed in three steps as in Release 15. According to this method, the user equipment 10 can reduce the increase amount of higher layer parameters by configuring the PUCCH resource set per slot, as in the case of Release 15, and the user equipment 10 can apply the subslot-based HARQ-ACK feedback.

### (Step 1)

A sub-slot for transmitting a HARQ-ACK code block is determined based on K1 indicating HARQ-ACK timing. Here, regarding the association between the PUCCH and the sub-slot, when the start symbol of the PUCCH is included in sub-slot k, the K1 may be applied, assuming that the PUCCH is included in the sub-slot k. Furthermore, regarding the association between the PDSCH and the sub-slot, when the last symbol of the PDSCH is included in sub-slot n, the K1 may be applied, assuming that the PDSCH may be included in the sub-slot n. It is noted that, when the PDSCH is transmitted across the sub-slot boundary or the slot boundary, and/or when the PDSCH is transmitted in a plurality of sub-slots or a plurality of slots, the last sub-slot of the plurality of sub-slots may be determined as the sub-slot n.

### (Step 2)

One PUCCH resource set is determined from the one or more slot-based PUCCH resource sets based on the value of N (i.e., the values of N₂ and/or N₃) which defines the boundary of the selection of the PUCCH resource set on the axis indicating the payload size of the UCI and payload size of the UCI serving as a reference for selecting the PUCCH resource set configured by the higher layer parameters. It is noted that N₂ and/or N₃ may be defined as different parameters for the URLLC PUCCH resource set and the eMBB PUCCH resource set, and may be set to different values. Alternatively, it may be defined as a common parameter for the URLLC PUCCH resource set and the eMBB PUCCH resource set.

### (Step 3)

Using the value of the PRI field included in the DCI, PUCCH resources are determined from the determined PUCCH resource set. When the number of PUCCH resources in the PUCCH resource set is 2, the number of bits in the PRI field is to be 1. When the number of PUCCH resources in the PUCCH resource set is 4, the number of bits in the PRI field is to be 2. When the number of PUCCH resources in the PUCCH resource set is greater than or equal to 8, the number of bits in the PRI field is to be 3. Additionally/alternatively, the PUCCH resources may be determined using an implicit indication (e.g., 1 bit, 2 bits, or more than 2 bits based on a CCE index).

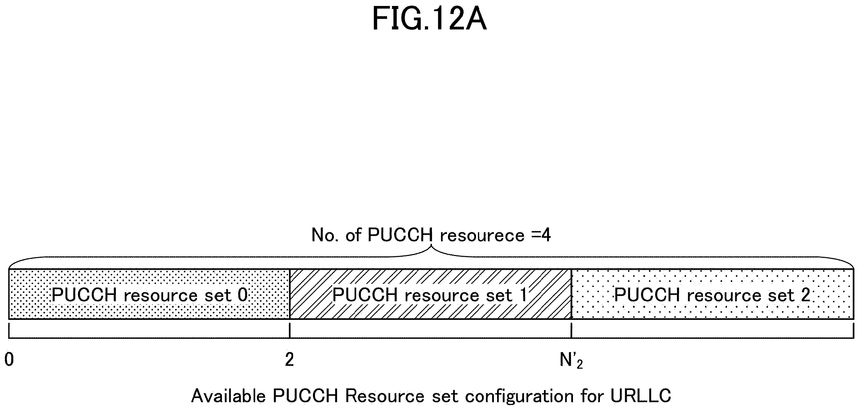

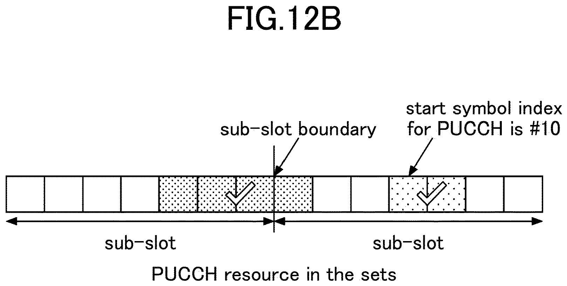

A specific example of Proposal 1-2 is described with reference to Figs. 12A to 12C. For example, in Fig. 12A, three PUCCH resource sets are configured as the URLLC PUCCH resource set for the user equipment 10 corresponding to the URLLC service. That is, PUCCH resource set #0, PUCCH resource set #1, and PUCCH resource set #2 are configured for one slot. Each PUCCH resource set includes four PUCCH resources, and N₂' and N₃', which are boundaries of the PUCCH resource set sizes, may be the same as or different from the values used for the eMBB PUCCH resource set. As illustrated in Fig. 12B, a PUCCH resource in the PUCCH resource set may be allowed to cross the sub-slot boundary.

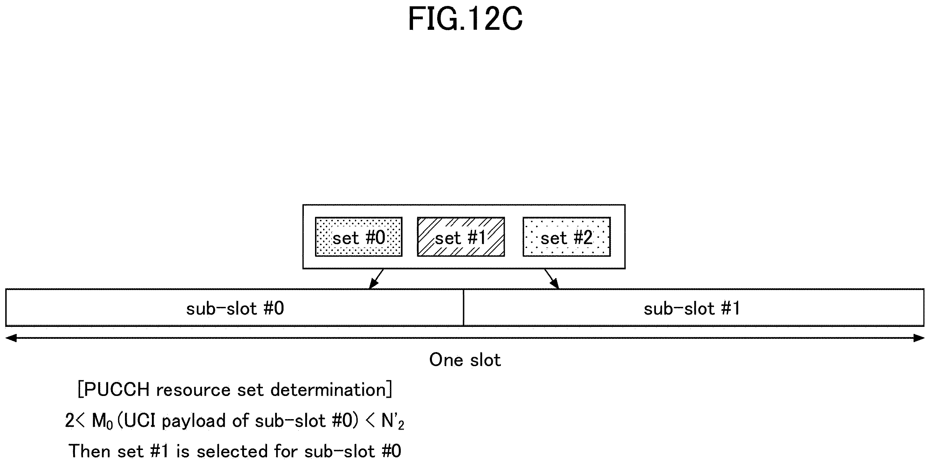

Then, as illustrated in Fig. 12C, PUCCH resource set #0, PUCCH resource set #1, and PUCCH resource set #2 are used in one slot. That is, these PUCCH resource sets are used in a plurality of sub-slots. For example, if the payload size of the UCI for sub-slot #0 is greater than 2 and less than N2', the PUCCH resource set #1 is determined as the PUCCH resource set used in the slot.

### (Proposal 2)

The PUCCH resource sets for the eMBB and the URLLC have a common configuration. That is, the URLLC PUCCH resource set and the eMBB PUCCH resource set may not be distinguished from each other and may be configured by a common higher layer parameter. PUCCH resource set 0, PUCCH resource set 1, PUCCH resource set 2, and PUCCH resource set 3 defined in Release 15 may be used for the eMBB and the URLLC. That is, the PUCCH resource set configured by the common higher layer parameter may be used regardless of a method for identifying a service type of the received data, and/or a method for identifying a HARQ-ACK codebook that should include a HARQ-ACK corresponding to the received data, and/or a method (signaling) for distinguishing the UE operations when transmitting the HARQ-ACK corresponding to the received data.

Furthermore, one or more new PUCCH resource sets used for the URLLC (that is, used for the HARQ-ACK feedback of the URLLC) may be additionally defined and/or configured. Here, the one or more PUCCH resource sets to be newly added may include, for example, four PUCCH resources, or may include eight PUCCH resources, and the number of PUCCH resources is not limited thereto. The user equipment 10 may separately select a PUCCH resource set for the eMBB (that is, used for HARQ-ACK feedback of the eMBB) and a PUCCH resource set for the URLLC (that is, used for HARQ-ACK feedback of the URLLC). When the PUCCH resource set is used for the HARQ-ACK feedback of the URLLC, similar to Proposal 1, the definition of the reference point of the start symbol of the PUCCH resources may be changed, and the reference point may be in a sub-slot boundary instead of the slot boundary. The PUCCH resource sets 0, 1, 2, 3, and/or the one or more newly added PUCCH resource sets may include more than eight PUCCH resources. In this case, the user device 10 may determine the PUCCH resources by specifying whether the service type is directed to the eMBB or the URLLC using the indication by 1 to 3 bits of the PRI field and the DCI format, RNTI, explicit indication in the DCI, or CORESET/search space.

For the determination of PUCCH resources in one PUCCH resource set for the URLLC (i.e., used for HARQ-ACK feedback of the URLLC), it may be possible to set the size of the PRI field. When the number of PUCCH resources in the PUCCH resource set is 4, the size of the PRI field may be 2 bits. When the number of PUCCH resources in the PUCCH resource set is 8, the size of the PRI field may be 3 bits. In PUCCH resource sets 0, 1, 2, and 3 of Release 15 (that is, in the PUCCH resource sets configured by the common higher layer parameters), even when eight PUCCH resources are included therein, the size of the PRI field for determining the PUCCH resources used for the HARQ-ACK feedback of the URLLC may be 1 bit or 2 bits. In other words, the number of PUCCH resources that can be specified by the PRI field may be smaller than the number of PUCCH resources in the PUCCH resource set.

In this case, for example, when the size of the PRI field is 2 bits, among the PUCCH resources in one to-be-used PUCCH resource set, four resources whose start symbols are temporally earlier may be made available for the HARQ-ACK feedback of the URLLC. Alternatively, among the PUCCH resources in one to-be-used PUCCH resource set and among short PUCCH formats (which are PUCCH format 0 and PUCCH format 2 or PUCCH formats having a length of 2 symbols or less), four resources whose start symbols are located forward in time may be made available for the HARQ-ACK feedback of the URLLC.

Here, the association between the PUCCH format and the PRI field may be such that an identification number of the PUCCH format increases as the value of the PRI field increases. For example, when only the short PUCCH format is used for the HARQ-ACK feedback of the URLLC and the PUCCH resources #0, #2, #4, and #6 in the PUCCH resource set are in the short PUCCH format, value 00 of the PRI field may be associated with the PUCCH resource #0, value 01 of the PRI field may be associated with the PUCCH resource #2, value 10 of the PRI field may be associated with the PUCCH resource #4, and value 11 of the PRI field may be associated with the PUCCH resource #6.

### (Proposal 2-1)

It is not necessary to use one or more PUCCH resource sets newly added for the HARQ-ACK feedback of the URLLC for the HARQ-ACK feedback of the eMBB. In the case of the HARQ-ACK feedback of the URLLC, N₂ and N₃ specifying a boundary of the size of the PUCCH resource sets configured for the PUCCH resource set 0, the PUCCH resource set 1, the PUCCH resource set 2, and the PUCCH resource set 3 may be reused, and (i) an axis which represents the payload size of the UCI for selecting any one of one or more PUCCH resource sets to be newly added and (ii) an axis which represents the payload size of the UCI configured for the PUCCH resource set 0, the PUCCH resource set 1, the PUCCH resource set 2, and the PUCCH resource set 3 may be overlapped. According to such a configuration, for the user equipment 10 corresponding to the URLLC traffic, it is possible to sufficiently secure PUCCH resources that can be used for the HARQ feedback of the URLLC, and to reduce the increase amount of the higher layer parameters.

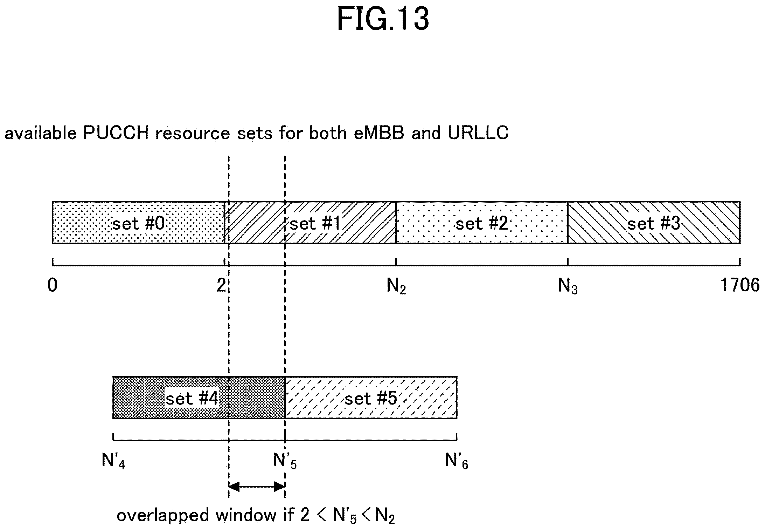

FIG. 13 illustrates an example of a case where (i) an axis (horizontal axis) which represents the payload size of a UCI serving as a reference for selecting any one of PUCCH resource sets #0 to #3, and (ii) an axis (horizontal axes) which represents the payload size of the UCI serving as a reference for selecting any one of PUCCH resource set #4 and PUCCH resource set #5 are overlapped. When determining the PUCCH resource, the same method as the case of Release 15 may be used for the HARQ-ACK feedback of the eMBB. For the HARQ-ACK feedback of the URLLC, different selection rules may be defined. At this time, regarding a boundary of the payload size of the UCI for determining the to-be-used PUCCH resource set, higher layer parameters (for example, N₄' and/or N₅')specifying the boundary may be defined for the one or more newly added PUCCH resource sets.

### (Proposal 2-1-1)

Three-step PUCCH resource determination method in Release 15 may be applied to the HARQ-ACK feedback of the URLLC. When two or more PUCCH resource sets are selected based on the payload size of the UCI transmitted collectively in one sub-slot, a PUCCH resource set to which the smallest index is assigned is selected, and from the selected PUCCH resource set, a PUCCH resource specified by the value of the PRI field included in the DCI may be selected.

### (Proposal 2-1-2)

Two-step PUCCH resource determination method may be introduced. When two or more PUCCH resource sets are selected based on the payload size of the UCI transmitted collectively in the sub-slot, among the plurality of PUCCH resources specified from each of the two or more PUCCH resource sets, a PUCCH resource that includes a start symbol whose position is the earliest in time and/or has the minimum length may be selected by the value of the PRI field included in the DCI. In the above PUCCH resource determination method, either the position or the length of the start symbol may be prioritized.

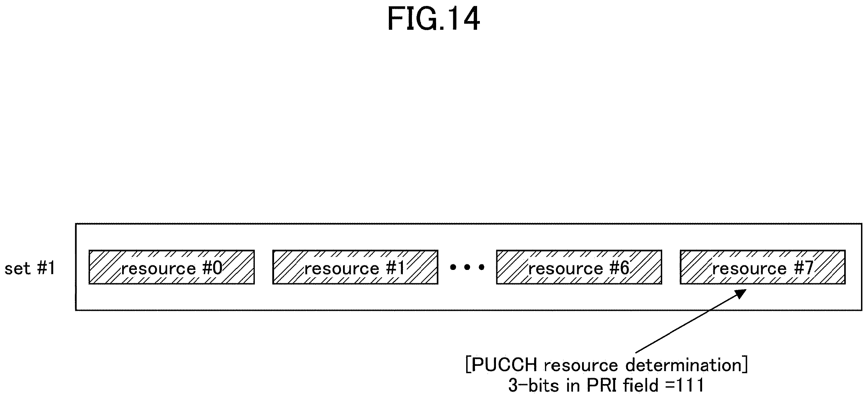

A specific example of Proposal 2-1-1 is described with reference to Figs. 13 and 14. For example, as illustrated in Fig. 13, it is assumed that two new PUCCH resource sets are introduced for the HARQ-ACK feedback of the URLLC, four PUCCH resource sets (PUCCH resource sets #0 to #3) are made available for the HARQ-ACK feedback of the eMBB, and six PUCCH resource sets (PUCCH resource sets #0 to #5) are made available for the HARQ-ACK feedback of the URLLC.

In this case, it is also assumed that, in the HARQ-ACK feedback of the URLLC, the size of the payload of the UCI transmitted collectively in sub-slot #1 is larger than 2 and smaller than N₅' (N₅'<N₂). In this case, the PUCCH resource set #1 and the PUCCH resource set #4 can be used. In this case, one of the PUCCH resource set #1 and the PUCCH resource set #4 may be selected based on a predetermined rule. For example, if the predetermined rule is a rule of selecting a PUCCH resource set to which the smallest PUCCH resource set index is assigned, the PUCCH resource set #1 is selected (alternatively, if the predetermined rule is a rule of selecting a PUCCH resource set to which the largest PUCCH resource set index is assigned, the PUCCH resource set #4 is selected).

Next, one of PUCCH resources #0 to #7 included in the PUCCH resource set #1 is selected based on the value of the PRI field included in the DCI. In the example of Fig. 14, since the 3-bit value of the PRI field is 111, the PUCCH resource #7 is selected.

A specific example of Proposal 2-1-2 is described with reference to Figs. 13 to 15. For example, as illustrated in Fig. 13, it is assumed that two new PUCCH resource sets are introduced for the HARQ-ACK feedback of the URLLC, four PUCCH resource sets (PUCCH resource sets #0 to #3) are made available for the HARQ-ACK feedback of the eMBB, and six PUCCH resource sets (PUCCH resource sets #0 to #5) are made available for the HARQ-ACK feedback of the URLLC.

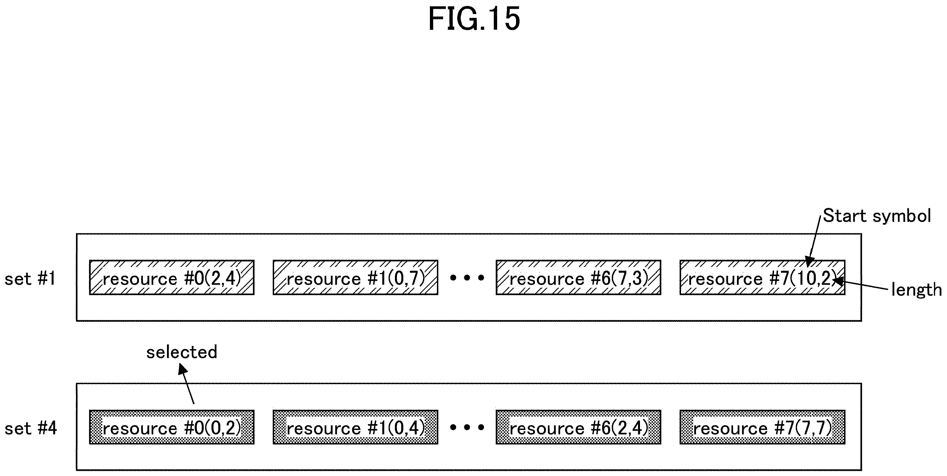

In this case, it is also assumed that, in the HARQ-ACK feedback of the URLLC, the payload size of the UCI transmitted collectively in sub-slot #1 is larger than 2 and smaller than N₅' (N₅'<N₂). In this case, the PUCCH resource set #1 and the PUCCH resource set #4 can be used. In this case, one of the two PUCCH resource sets is selected according to a predetermined rule. For example, if the predetermined rule is a rule of selecting a PUCCH resource that includes a start symbol located at the earliest in time and has the minimum length among a plurality of PUCCH resources included in the two PUCCH resource sets, the PUCCH resource #0 in Fig. 15 is selected.

### (Proposal 2-2)

The PUCCH resource set newly added to the HARQ-ACK feedback of the URLLC may be made available for the HARQ-ACK feedback of the eMBB. That is, exactly the same PUCCH resource sets may be defined, configured, and/or used in the HARQ-ACK feedback of the URLLC and the HARQ-ACK feedback of the eMBB. All available PUCCH resource sets may be configured for the user equipment 10 for each slot. A PUCCH resource in the PUCCH resource set may be allowed to cross the sub-slot boundary.

### (Proposal 2-2-1)

The value of N which defines the boundary of the selection of the PUCCH resource set on the axis indicating the payload size of the UCI serving as the reference for selecting the PUCCH resource set is reconfigured for all PUCCH resource sets. Overlapping of the axes, each representing the payload size of the UCI used as a reference for selecting a PUCCH resource set, that results in selecting different PUCCH resource sets may be disallowed. The PUCCH resource set selection method in Release 15 may be applied. The user equipment 10 may separately determine a PUCCH resource set used for the HARQ-ACK feedback of the eMBB and a PUCCH resource set used for the HARQ-ACK feedback of the URLLC. The selection of the PUCCH resources in one PUCCH resource set may be performed based on the value of the PRI field of the DCI as in Release 15. The value of N that defines the boundary of the selection of the PUCCH resource set on the axis indicating the payload size of the UCI serving as a reference for selecting the PUCCH resource set may be different for the HARQ-ACK feedback of the URLLC and for the HARQ-ACK feedback of the eMBB.

### (Proposal 2-2-2)

For PUCCH resource sets 0, 1, 2, and 3, similar to Release 15, the value of N that defines the boundary of the selection of the PUCCH resource set on the axis indicating the payload size of the UCI serving as the reference for selecting the PUCCH resource set may be configured, and the axis indicating the payload size of the UCI serving as a reference for selecting a newly added PUCCH resource set may be allowed to overlap with the axis indicating the payload size of the UCI serving as the reference for selecting the PUCCH resource sets 0, 1, 2, and 3. In this case, as a PUCCH resource determination method, the same rules as applied in Proposal 2-1-1 or Proposal 2-1-2 may be applied to the HARQ-ACK feedback of the eMBB and the HARQ-ACK feedback of the URLLC.

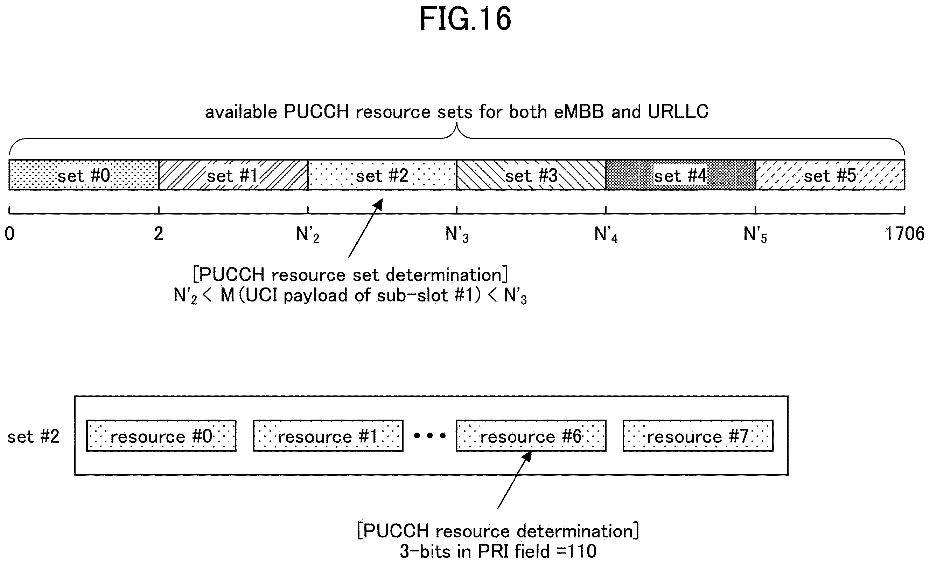

A specific example of Proposal 2-2-1 is described with reference to Fig. 16. For example, when two new PUCCH resource sets are introduced, the user equipment 10 is allowed to use six PUCCH resource sets for the HARQ-ACK feedback of the eMBB and the HARQ-ACK feedback of the URLLC.

Here, if the payload size of the UCI of sub-slot #1 is larger than N₂' and smaller than N₃' illustrated in Fig. 16, PUCCH resource set #2 is to be selected.

Next, one of PUCCH resources #0 to #7 included in PUCCH resource set #2 is selected based on the value of the PRI field included in the DCI. In the example of Fig. 16, since the 3-bit value of the PRI field is 110, PUCCH resource #6 is selected.

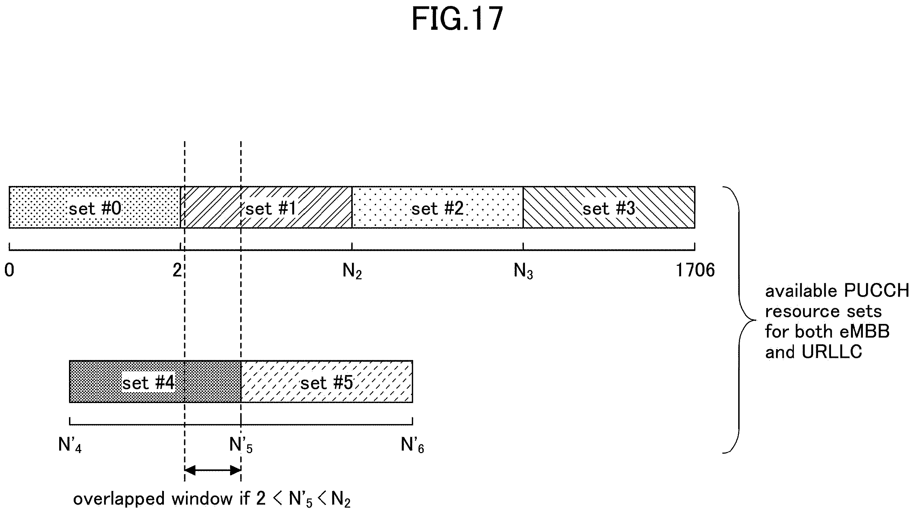

Next, a specific example of Proposal 2-2-2 is described with reference to Fig. 17. For example, when two new PUCCH resource sets are introduced, the user equipment 10 is allowed to use six PUCCH resource sets for the HARQ-ACK feedback of the eMBB and the HARQ-ACK feedback of the URLLC.

In this case, it is assumed that, in the case of the HARQ-ACK feedback of the URLLC or the HARQ-ACK feedback of the eMBB, the payload size of the UCI transmitted collectively in sub-slot #1 or slot #1 is larger than 2 and smaller than N₅' (N₅'<N₂). In this case, PUCCH resource set #1 and PUCCH resource set #4 can be used. In this case, one of the PUCCH resource set #1 and the PUCCH resource set #4 may be selected based on a predetermined rule. For example, if the predetermined rule is a rule of selecting a PUCCH resource set to which the smallest PUCCH resource set index is assigned, the PUCCH resource set #1 is selected (alternatively, if the predetermined rule is a rule of selecting a PUCCH resource set to which the largest PUCCH resource set index is assigned, the PUCCH resource set #4 is selected).

Next, one of PUCCH resources #0 to #7 included in the PUCCH resource set #1 is selected based on the value of the PRI field included in the DCI.

Alternatively, either of the two PUCCH resource sets (the PUCCH resource set #1 and the PUCCH resource set #4) may be selected according to a predetermined rule. For example, if the predetermined rule is a rule of selecting a PUCCH resource that includes a start symbol located at the earliest in time and has the minimum length among a plurality of PUCCH resources included in the two PUCCH resource sets, for example, the PUCCH resource #0 in FIG. 15 is selected.

### (Device Configurations)

Next, examples of functional configurations of the user equipment 10 and the base station 20 for executing the above-described processing and operation are described. The user equipment 10 and the base station 20 include all the functions for executing the above-described embodiments. However, each of user equipment 10 and the base station 20 may be provided with only some functions described in the embodiments. Note that the user equipment 10 and the base station 20 may be collectively referred to as a communication apparatus.

### <User Equipment>

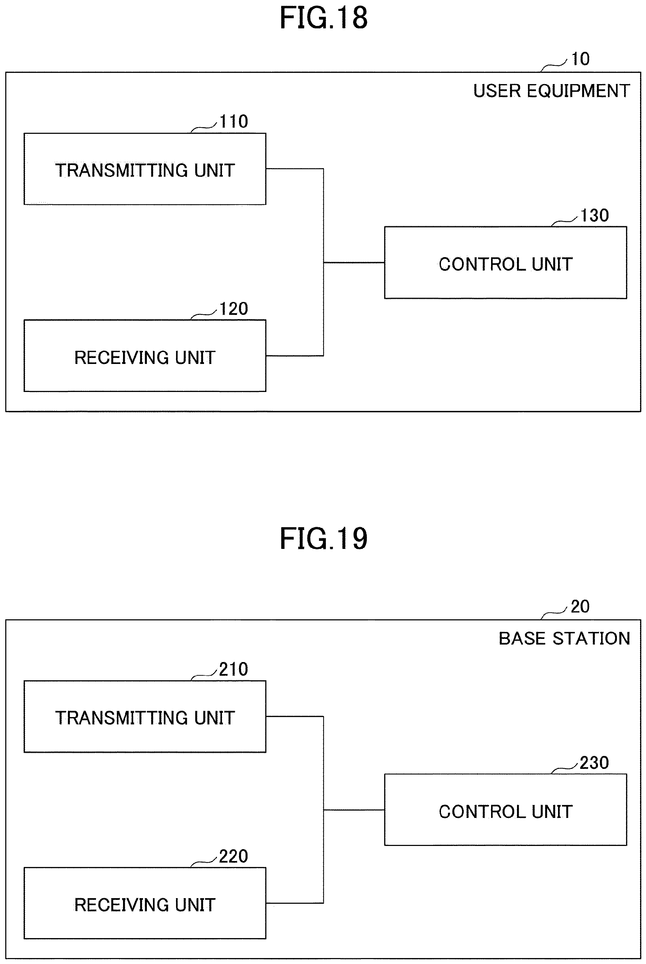

FIG. 18 is a diagram illustrating an example of a functional configuration of the user equipment 10. As illustrated in Fig. 18, the user equipment 10 includes a transmitting unit 110, a receiving unit 120, and a control unit 130. The functional configuration illustrated in FIG. 18 is an example. A functional division and the names of the functional units may be any division and the names provided that the operation according to the embodiments can be executed. The transmitting unit 110 may be referred to as a transmitter, and the receiving unit 120 may be referred to as a receiver.

The transmitting unit 110 creates transmission from transmission data, and wirelessly transmits the transmission signal. The transmitting unit 110 can form one or a plurality of beams. The receiving unit 120 wirelessly receives various signals, and obtains a higher layer signal from the received physical layer signal. Furthermore, the receiving unit 120 includes a measurement unit that obtains received power or the like by measuring a received signal.

The control unit 130 controls the user equipment 10. Note that, a function of the control unit 130 related to transmission may be included in the transmitting unit 110, and a function of the control unit 130 related to reception may be included in the receiving unit 120.

For example, the receiving unit 120 of the user equipment 10 receives DCI for scheduling transmission of data on the PDSCH. The control unit 130 specifies the timing of the slot for transmitting a HARQ-ACK based on the indicator (PDSCH-to-HARQ_feedback timing indicator field) indicating the timing of the slot for transmitting a HARQ-ACK included in the DCI. Furthermore, the receiving unit 120 of user equipment 10 receives RRC signaling from the base station 20, and the control unit 130 configures one or more PUCCH resource sets based on the RRC signaling. Furthermore, the control unit 130 selects one PUCCH resource set from one or more PUCCH resource sets based on UCI bits in the slot for transmitting the HARQ-ACK, and selects a PUCCH resource specified by the PRI field included in the DCI from a plurality of PUCCH resources included in the one PUCCH resource set. The transmitting unit 110 transmits the UCI including the HARQ-ACK using the PUCCH resource selected by the control unit 130.

In addition, the receiving unit 120 of the user equipment 10 receives the RRC signaling from the base station 20, and the control unit 130 configures one or more subslot-based PUCCH resource sets dedicated to URLLC based on the RRC signaling. The control unit 130 determines whether the HARQ-ACK feedback is directed for the URLLC or the eMBB based on DCI format, RNTI, explicit indication in the DCI, search space, or the like. The control unit 130 determines a sub-slot based on K1 included in the DCI, and determines a PUCCH resource set in the sub-slot based on the payload size of the UCI. Furthermore, the control unit 130 selects a PUCCH resource specified by the PRI field included in the DCI. The transmitting unit 110 transmits the UCI including the HARQ-ACK using the PUCCH resource selected by the control unit 130.

In addition, the receiving unit 120 of the user equipment 10 receives the RRC signaling from the base station 20, and the control unit 130 configures the existing PUCCH resource set commonly used between the eMBB and the URLLC, and a newly added PUCCH resource set to the URLLC based on the RRC signaling. In this case, the control unit 130 may configure one or more PUCCH resource sets newly added for the URLLC, so that the one or more PUCCH resource sets newly added for the URLLC are not used for the eMBB. The control unit 130 may overlap an axis indicating the payload size of the UCI for selecting the PUCCH resource set among the one or more newly added PUCCH resource sets with the axis indicating the payload size of the UCI defined for the plurality of existing PUCCH resource sets. When two or more PUCCH resource sets are selected based on the payload size of the UCI in one sub-slot, the control unit 130 may select a PUCCH resource set to which the smallest index is assigned, and may select PUCCH resources specified by the value of the PRI field included in the DCI in the selected PUCCH resource set.

### <Base Station 20>

Fig. 19 is a diagram illustrating an example of a functional configuration of the base station 20. As illustrated in Fig. 19, the base station 20 includes a transmitting unit 210, a receiving unit 220, and a control unit 230. A functional configuration illustrated in Fig. 19 is an example. A functional division and names of the functional units may be any division and names provided that the operation according to the embodiments can be executed. Note that, the transmitting unit 210 may be referred to as a transmitter, and the receiving unit 220 may be referred to as a receiver.

The transmitting unit 210 includes a function of generating a signal to be transmitted to the user equipment 10, and wirelessly transmitting the signal. The receiving unit 220 includes a function of receiving various signals transmitted from the user equipment 10, and obtaining, for example, information of a higher layer from the received signals. Furthermore, the receiving unit 220 includes a measurement unit that obtains received power or the like by measuring a signal received by the receiving unit 220. The control unit 230 controls the base station 20. Note that the function of the control unit 230 related to transmission may be included in the transmitting unit 210, and the function of the control unit 230 related to reception may be included in the receiving unit 220.

For example, the control unit 230 of the base station 20 may generate an RRC message for causing the user equipment 10 to configure the PUCCH resource set, and the transmitting unit 210 may transmit RRC signaling including the RRC message to the user equipment 10. The receiving unit 220 receives the UCI including a HARQ-ACK transmitted from the user equipment 10.

### (Hardware configuration)

In the block diagrams (FIGs. 18 and 19) used for the description of the embodiments, the blocks of the functional units are illustrated. The functional blocks (configuring units) are implemented by any combination of hardware and/or software. A device of implementing each functional block is not particularly limited. In other words, each functional block may be implemented by one device in which a plurality of elements is physically and/or logically combined or may be implemented by a plurality of devices, that is, two or more devices which are physically and/or logically separated and are directly and/or indirectly connected (for example, a wired and/or wireless manner).

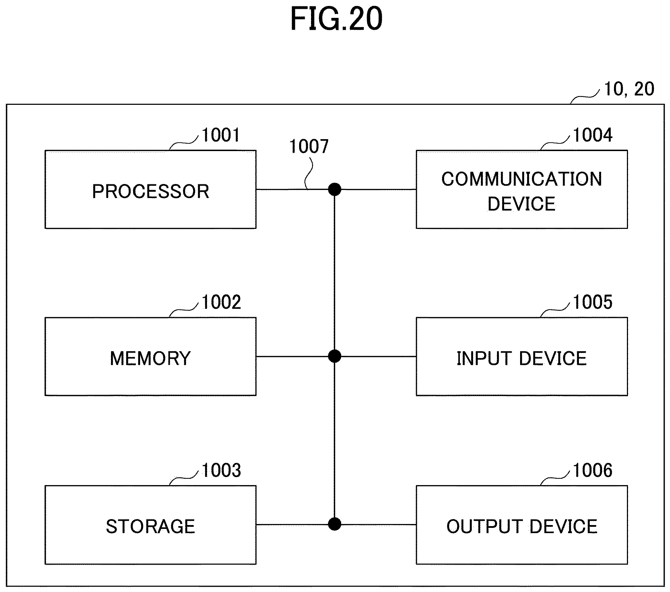

Furthermore, for example, both the user equipment 10 and the base station 20 in one embodiment of the present invention may function as a computer that performs the process according to the embodiments. FIG. 20 is a diagram illustrating an example of a hardware configuration of each of the user equipment 10 and the base station 20 according to the embodiments. Each of the user equipment 10 and the base station 20 may be physically configured as a computer device including a processor 1001, a memory 1002, a storage 1003, a communication device 1004, an input device 1005, an output device 1006, a bus 1007, and the like.

In the following description, the term "device" may be replaced with a circuit, device, unit, or the like. The hardware configuration of each of the user equipment 10 and the base station 20 may be configured to include one or more devices indicated by 1001 to 1006 illustrated in the figure or may be configured without including some devices.

Each function in each of the user equipment 10 and the base station 20 is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU) including an interface with a peripheral device, a control device, an operation device, a register, and the like.

Furthermore, the processor 1001 reads a program (program code), a software module, or data from the storage 1003 and/or the communication device 1004 out to the memory 1002, and executes various types of processes according to them. A program causing a computer to execute at least some of the operations described in the embodiments is used as the program. For example, the transmitting unit 110, the receiving unit 120, and the control unit 130 of the user equipment 10 illustrated in FIG. 18 may be implemented by a control program which is stored in the memory 1002 and operates on the processor 1001. The transmitting unit 210, the receiving unit 220, and the control unit 230 of the base station 20 illustrated in FIG. 19 may be implemented by a control program which is stored in the memory 1002 and operates on the processor 1001. Various types of processes are described to be performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the radio communication method according to an embodiment of the present invention.

The storage 1003 is a computer-readable recording medium and may be configured with, for example, at least one of an optical disk, such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transmitting and receiving device) for performing communication between computers via a wired and/or wireless network and is also referred to as a "network device," a "network controller," a "network card," a "communication module," or the like. For example, the transmitting unit 110 and the receiving unit 120 of the user equipment 10 may be implemented by the communication device 1004. Furthermore, the transmitting unit 210 and the receiving unit 220 of the base station 20 may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected via the bus 1007 to communicate information with each other. The bus 1007 may be configured with a single bus or may be configured with different buses between the devices.

Furthermore, each of the user equipment 10 and the base station 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### (Conclusion of the embodiments)

In this specification, at least the following user equipment and communication method are disclosed.

A user equipment including
a receiving unit that receives control information and data;
a control unit that
   specifies a sub-slot for transmitting a Hybrid Automatic Repeat Request-Acknowledgment (HARQ-ACK) for the data received by the receiving unit based on the control information received by the receiving unit,
   configures resource sets of one or more uplink control channels used for HARQ-ACK bit transmission for the specified sub-slot,
   selects a resource set of one uplink control channel among the resource sets of the one or more uplink control channels based on payload size of uplink control information including the HARQ-ACK, and
   selects one resource among one or more resources included in the resource set of the selected one uplink control channel based on the control information received by the receiving unit; and
a transmitting unit that transmits the uplink control information using the selected one resource.

According to the above-described configuration, it is possible to configure a subslot-based PUCCH resource set per sub-slot, and to sufficiently secure usable PUCCH resources for the user equipment corresponding to URLLC traffic.

Upon determining that the data is for Ultra Reliable Low Latitude Communications (URLLC) based on the control information, the control unit may configure the resource sets of the one or more uplink control channels as resource sets of one or more uplink control channels dedicated to the URLLC.

The resource set of the uplink control channel selected by the control unit may include a plurality of resources, and the control unit may select one resource of the plurality of resources based on a value of an indicator that indicates a resource to be selected included in the control information received by the receiving unit.

The control unit may configure, for each of a plurality of sub-slots included in one slot, the resource sets of the one or more uplink control channels.

A communication method performed by a user equipment, the communication method comprising:
receiving control information and data;
specifying a sub-slot for transmitting a Hybrid Automatic Repeat Request-Acknowledgment (HARQ-ACK) for the received data based on the received control information;
configuring resource sets of one or more uplink control channels used for HARQ-ACK bit transmission for the specified sub-slot;
selecting a resource set of one uplink control channel among the resource sets of the one or more uplink control channels based on payload size of uplink control information including the HARQ-ACK;
selecting one resource among one or more resources included in the resource set of the selected one uplink control channel based on the received control information; and
transmitting the uplink control information using the selected one resource.

According to the above-described configuration, it is possible to configure a subslot-based PUCCH resource set per sub-slot, and to sufficiently secure usable PUCCH resources for the user equipment corresponding to URLLC traffic.

### (Supplement of embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used as necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the user equipment 10 and the base station 20 are described using the functional block diagrams, but such devices may be implemented by hardware, software, or a combination thereof. Software executed by the processor included in the user equipment 10 according to the embodiment of the present invention and software executed by the processor included in the base station 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an "RRC message" and may be, for example, an RRC connection setup message, an RRC connection reconfiguration message, or the like.

Each aspect and embodiment described in this specification is applicable to Long Term Evolution (LTE), LTE-Advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be modified in order as long as there is no contradiction. For example, the method described in this specification presents elements of various steps in an exemplary order and is not limited to a presented specific order.

In this specification, a specific action that is supposed to be performed by the base station 20 may be performed by an upper node in some cases. In the network including one or more network nodes including the base station 20, various operations performed for communication with the user equipment 10 can be obviously performed by the base station 20 and/or any network node (for example, an MME, an S-GW, or the like is considered, but it is not limited thereto) other than the base station 20. The example in which the number of network nodes excluding the base station 20 is one has been described above, but a combination of a plurality of other network nodes (for example, an MME and an S-GW) may be provided.

Each aspect/embodiment described in this specification may be used alone, may be used in combination, or may be switched in association with execution.

The user equipment 10 is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The base station 20 may also be referred to as a Node B (NB), an enhanced Node B (eNB), a base station, a gNB, or other appropriate terms, by those having skill in the art.

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

A phrase "on the basis of" used in this specification is not limited to "on the basis of only" unless otherwise stated. In other words, a phrase "on the basis of" means both "on the basis of only" and "on the basis of at least."

"Include," "including," and variations thereof are intended to be comprehensive, similar to a term "provided with (comprising)" as long as the terms are used in this specification or claims set forth below. Furthermore, the term "or" used in this specification or claims set forth below is intended not to be an exclusive OR.

In the present disclosure, for example, when an article such as "a," "an," or "the" in English is added by a translation, such an article is assumed to include the plural unless it is obviously indicated that such an article does not include the plural.

Although the present invention has been described above in detail, it is obvious to those having skill in the art that the present invention is not limited to the embodiments described in this specification. The present invention can be carried out as revisions and modifications without departing from the gist and scope of the present invention defined by the claims set forth below. Accordingly, the description of this specification is intended to be exemplary and does not have any restrictive meaning to the present invention.

### LIST OF REFERENCE SYMBOLS

- 10: user equipment
- 110: transmitting unit
- 120: receiving unit
- 130: control unit
- 20: base station
- 210: transmitting unit
- 220: receiving unit
- 230: control unit
- 1001: processor
- 1002: memory
- 1003: storage
- 1004: communication device
- 1005: input device
- 1006: output device

## Claims

1. A user equipment comprising:
a receiving unit that receives control information and data;
a control unit that
specifies a sub-slot for transmitting a Hybrid Automatic Repeat Request-Acknowledgment (HARQ-ACK) for the data received by the receiving unit based on the control information received by the receiving unit,
configures resource sets of one or more uplink control channels used for HARQ-ACK bit transmission for the specified sub-slot,
selects a resource set of one uplink control channel among the resource sets of the one or more uplink control channels based on payload size of uplink control information including the HARQ-ACK, and
selects one resource among one or more resources included in the resource set of the selected one uplink control channel based on the control information received by the receiving unit; and
a transmitting unit that transmits the uplink control information using the selected one resource.

2. The user equipment according to claim 1, wherein, upon determining that the data is for Ultra Reliable Low Latitude Communications (URLLC) based on the control information, the control unit configures the resource sets of the one or more uplink control channels as resource sets of one or more uplink control channels dedicated to the URLLC.

3. The user equipment according to claim 1, wherein the resource set of the uplink control channel selected by the control unit includes a plurality of resources, and the control unit selects one resource of the plurality of resources based on a value of an indicator that indicates a resource to be selected included in the control information received by the receiving unit.

4. The user equipment according to claim 1, wherein the control unit configures, for each of a plurality of sub-slots included in one slot, the resource sets of the one or more uplink control channels.

5. A communication method performed by a user equipment, the communication method comprising:
receiving control information and data;
specifying a sub-slot for transmitting a Hybrid Automatic Repeat Request-Acknowledgment (HARQ-ACK) for the received data based on the received control information;
configuring resource sets of one or more uplink control channels used for HARQ-ACK bit transmission for the specified sub-slot;
selecting a resource set of one uplink control channel among the resource sets of the one or more uplink control channels based on payload size of uplink control information including the HARQ-ACK;
selecting one resource among one or more resources included in the resource set of the selected one uplink control channel based on the received control information; and
transmitting the uplink control information using the selected one resource.
